# FASCICULE DE BREVET EUROPEEN

(11) **EP 0 726 015 B1**
(45) Date de publication et mention de la délivrance du brevet: **30.12.1998**
(21) Numéro de dépôt: 94931620.2
(22) Date de dépôt: 21.10.1994
(51) Int. Cl.: H04N 7/14

(54) **TERMINAL DE VISIOPHONIE BI-MODE RNIS/RTC**
ZWEIMODEN-BILDFERNSPRECHSTATION FÜR ISDN UND ÖFFENTLICHE TELEFONNETZE
DUAL-MODE ISDN/STN VIDEO TELEPHONY TERMINAL

(30) Priorité: 26.10.1993 FR 9312755
(43) Date de publication de la demande: 14.08.1996
(73) Titulaire: THOMSON multimedia, 92648 Boulogne Cédex (FR)
(72) Inventeur: HERVE, Philippe, F-92402 Courbevoie Cédex (FR)
(74) Mandataire: Ruellan-Lemonnier, Brigitte
(86) Numéro de dépôt international: FR9401230
(87) Numéro de publication internationale: WO9512281

(56) Documents cités:
- EP-A- 0 495 574
- EP-A- 0 558 377

## Description

La présente invention conceme un terminal de visiophonie bi-mode RNIS/RTC.

Le domaine est celui de la transmission et du stockage des informations audio et vidéo.

Il existe actuellement des répondeurs téléphoniques statiques qui utilisent un système de compression du signal audio numérique et stockent en mémoire vive RAM le signal comprimé. La durée d'enregistrement possible ou le nombre de messages laissés dépend du taux de compression du signal audio. Les silences peuvent être utilisés pour gagner en quantité mémoire. Le parallèle pour l'image n'existe pas dans le cas d'une communication en visiophonie et ce pour la raison principale que la norme actuelle de compression vidéo définie dans la recommandation H261 du CCITT abréviation de Comité Consultatif International Télégraphique et Téléphonique ne permet pas un stockage économique en mémoire.

La demande de brevet européen EP-A-0 558 377 décrit un codec vidéo pour applications visiophoniques et en particulier pour terminal visiophonique de réseau numérique à intégration de services.

Le but de l'invention est de pallier les inconvénients précités.

A cet effet, l'invention a pour objet un terminal de visiophonie bi-mode RNIS/RTC comportant au moins un équipement audio et un équipement vidéo couplés respectivement à un réseau RNIS par l'intermédiaire d'un codeur-décodeur bi-mode RNIS/RTC audio comportant un codeur audio RNIS, un décodeur audio RNIS, un codeur audio RTC et un décodeur audio RTC, et par un codeur-décodeur bi-mode RNIS/RTC vidéo comportant un codeur vidéo RNIS, un décodeur vidéo RNIS, un codeur vidéo RTC et un décodeur vidéo RTC, caractérisé en ce qu'il comporte pour intégrer une fonction de répondeur-enregistreur dans le terminal de visiophonie, une mémoire vive permettant le stockage des messages audiovisuels en mode RTC, en ce que la sortie des décodeurs audio et vidéo RNIS est couplée respectivement à l'entrée des codeurs audio et vidéo RTC pour "enregistrement d'un message audiovisuel, laissé par le correspondant du terminal distant appelant, dans la mémoire vive, et en ce que la sortie des décodeurs audio et vidéo RTC est couplée respectivement à l'entrée des codeurs audio et vidéo RNIS pour l'envoi d'un message audiovisuel, stocké dans la mémoire vive, invitant le correspondant du terminal appelant à laisser un message .

L'invention a pour avantage qu'elle permet d'implémenter directement et économiquement dans un terminal de visiophonie bi-mode, un répondeur qui émet une séquence audiovisuelle d'invitation à laisser un message et qui reçoit et stocke ce message sous forme audio et vidéo avec une utilisation optimale de la quantité de mémoire vive disponible.

D'autres caractéristiques et avantages de l'invention apparaîtront plus clairement dans la description qui suit faite en regard des dessins annexés qui représentent:
- la figure 1, un schéma synoptique d'un terminal de visiophonie bi-mode RNIS/RTC selon l'invention,
- la figure 2, le cheminement du flux d'informations audio et vidéo pour l'enregistrement d'un message d'invitation à laisser un message sur le répondeur du terminal selon l'invention,
- la figure 3, le cheminement du flux d'informations audio et vidéo pour l'envoi du message d'invitation sur appel d'un terminal RNIS,
- la figure 4, le cheminement du flux d'informations audio et vidéo pour l'envoi du message d'invitation sur appel d'un terminal RTC,
- la figure 5, le cheminement du flux d'informations audio et vidéo pour l'enregistrement d'un message laissé par un terminal distant RNIS sur le répondeur du terminal selon l'invention,
- la figure 6, le cheminement du flux d'informations audio et vidéo pour l'enregistrement d'un message laissé par un terminal distant RTC sur le répondeur du terminal selon l'invention, et
- la figure 7, le cheminement du flux d'informations audio et vidéo pour la lecture des messages enregistrés sur le répondeur du terminal selon l'invention.

L'invention utilise les fonctionnalités implémentées dans un terminal de visiophonie bi-mode pour réaliser une fonction de répondeur entièrement statique enregistrant la voix et l'image du correspondant.

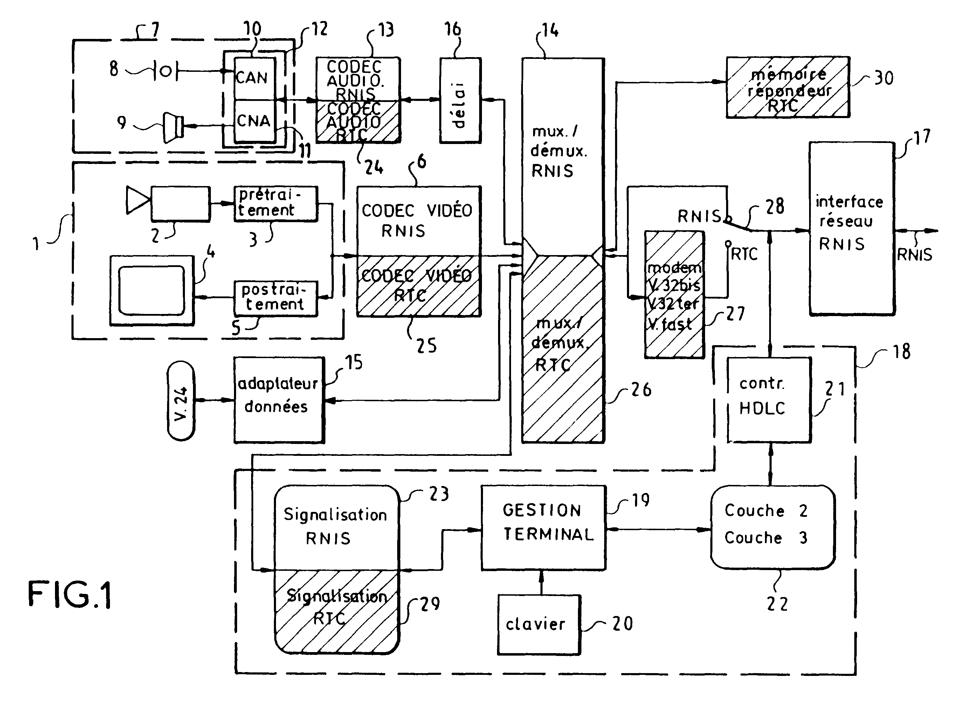

Un schéma synoptique d'un terminal bi-mode selon l'invention intégrant la fonction répondeur-enregistreur est illustré par la figure 1. Un tel terminal est branché sur une ligne RNIS, au niveau de l'interface physique S chez un abonné aux services du RNIS, et qui indistinctivement communique en visiophonie avec soi un terminal connecté sur le réseau téléphonique commuté, RTC, ou un terminal branché sur le RNIS. Certaines de ces fonctionnalités sont bi-modes et c'est cette particularité qui permet de réaliser avantageusement le terminal de visiophonie selon l'invention.

Un terminal de visiophonie ou visiophone RNIS comporte, selon la recommandation H.320 du CCITT, des équipements vidéo 1 délimités par une ligne fermée discontinue comprenant par exemple, une caméra 2 avec un objectif zoom ou grand angulaire et un capteur en technologie à transfert de charge CCD abréviation anglo-saxonne pour "Charge Coupled Device", un dispositif de pré-traitement 3 permettant une mise au format standard CCITT des images par exemple au format CIF ou QCIF, CIF étant l'abréviation anglo-saxonne pour "Common Intermediate Format" et QCIF pour "Quater of CIF", et un moniteur 4 de télévision couleur. Le moniteur 4 reçoit les images issues d'un dispositif de post-traitement 5, permettant la mise au format affichable des images issues d'un codec vidéo 6 auquel sont couplés les équipements vidéo 1. Le codec vidéo 6 comporte un codeur et un décodeur vidéo respectivement pour le codage et le décodage à faible débit d'images animées suivant la recommandation H.261 du CCITT, le débit pouvant varier d'environ 48 Kbits par seconde à 112 Kbits par seconde.

Le terminal comporte également, des équipements audio 7 délimités par une ligne fermée discontinue comportant au moins un microphone 8 et un haut parleur 9 pouvant être disposés dans un même combiné.

Le signal audio à l'origine analogique est converti numériquement pour l'émission d'un message en visiophonie à travers le réseau RNIS. Après transmission, il est converti analogiquement à la réception. Ces deux fonctions de conversion analogique-numérique et numérique-analogique, respectivement mis en oeuvre par un convertisseur analogique-numérique ou CAN 10 et un convertisseur numérique-analogique ou CNA 11, sont regroupées dans un même dispositif appelé "cofidec" 12, délimité par une ligne fermée discontinue, utilisant une compression de type loi A et/ou loi p. Le "cofidec" 12 est couplé à un codec audio 13 assurant respectivement le codage et le décodage d'un signal audio transmis lors de l'établissement d'une communication en visiophonie entre au moins deux correspondants.

Le codage-décodage audio doit répondre à l'une des trois recommandations du CCITT suivante :
- la recommandation G.711 relative à un codage-décodage en bande étroite à 64Kbits par seconde,
- la recommandation G.722 relative à un codage-décodage en bande élargie à 48,56 ou 64Kbits par seconde, et
- la recommandation G.728 relative à un codage-décodage en bande étroite à 16Kbits par seconde.

Un dispositif de suppression d'écho, non représenté, peut être couplé aux équipements audio 7 pour permettre une communication en main libre.

Les signaux audio, vidéo et autres donnés numériques transitent dans le terminal par un multipleur-démultiplexeur 14 suivant une structure en trame transportant aussi la signalisation en bande, destinée à un terminal distant et respectant la recommandation H.221 du CCITT. Un adaptateur de données 15 transforme le flux d'une interface, par exemple, V.24, en un train de bits exploitable par le multiplexeur-démultiplexeur 14.

Un dispositif de retard 16 est couplé entre le codec audio 13 et le multiplexeur-démultiplexeur 14 pour compenser temporellement le temps de codage et de décodage vidéo qui est supérieur au temps de codage et de décodage audio.

La couche 1 du modèle de référence OSI abréviation anglo-saxonne pour "Open System Interconnection" assure l'interface physique S, 17 définie par la recommandation I.430 du CCITT.

Un système de gestion 18 d'une communication audiovisuelle entre le RNIS et le terminal connecté au RNIS, suivant la recommandation H.242 du CCITT, est couplé entre l'entrée de l'interface 17, côté terminal, et l'une des entrées du multiplexeur-démultiplexeur 14, côté codec vidéo 6. Le système de gestion 18 est délimité sur la figure 1 par une ligne fermée discontinue. Il comporte une gestion terminal 19 munie d'un clavier 20 de commande, un contrôleur HDLC 21 abréviation anglo saxonne pour "High-Level Data Link Control" réalisant matériellement le tramage et le détramage de l'information de signalisation réseau dans le canal du RNIS à un débit de 16Kbits par seconde. Ce contrôleur 21 est couplé entre la couche 1 de l'interface physique S,17 et les couches 2 et 3, 22, du modèle de référence OSI. La couche 2 correspond à la couche de liaison des données et la couche 3 correspond à la couche des procédures d'appel de base. Ils répondent respectivement aux recommandations Q.921 et Q.931 du CCITT. Le système de gestion 18 comporte également une signalisation 23 correspondant à l'ensemble des procédures destinées à établir ou stopper une communication en visiophonie selon la recommandation H.242 du CCITT. Cette signalisation 23 est couplée entre le terminal de gestion 19 et le multiplexeur-démultiplexeur 14 côté codec vidéo 6.

Le visiophone en mode RTC peut être décrit en partant de la description du visiophone en mode RNIS précédent. Les dispositifs spécifiques au fonctionnement en mode RTC sont hachurés sur la figure 1.

En effet un certain nombre de fonctions se reconfigurent par rapport au fonctionnement du visiophone RNIS car le débit alloué est sensiblement plus faible. Le codage-décodage du signal audio et vidéo est effectué à plus bas débit qu'en mode RNIS. La technique de compression des signaux vidéo et audio en mode RTC n'est à ce jour pas encore normalisée mais le débit autorisé pour une qualité jugée acceptable se situe aux environs de 4,8Kbits par seconde pour le codage-décodage du signal audio, et se situe dans la gamme de 8 à 20 Kbits par seconde pour le codage-décodage du signal vidéo. Un codec audio RTC 24 à 4,8Kbits par seconde est associé au codec audio RNIS 13 et un codec vidéo RTC 25 de 8 à 20 Kbits par seconde est associé au codec vidéo RNIS 6.

De même, un multiplexeur-démultiplexeur RTC H.22X, 26, non encore normalisé, est associé au multiplexeur-démultiplexeur RNIS 14. Un modem 27 permettant de moduler et démoduler un train d'informations numériques sur une ligne téléphonique RTC suivant les normes V.32 bis, V.32ter et V.fast du CCITT est couplé entre les multiplexeurs-démultiplexeurs RNIS/RTC 14, 26 et la couche 1 de l'interface physique S 17 par un commutateur 28 permettant de sélectionner le mode RNIS ou RTC. En fonctionnement RNIS le modem 27 est déconnecté.

Une signalisation RTC 29 comprenant l'ensemble des procédures destinées à établir ou à stopper une communication visiophonique est associée à la signalisation RNIS H.242, 23. La fonction répondeur-enregistreur du dispositif selon l'invention n'apparaît dans le schéma synoptique fonctionnel de la figure 1 que par une mémoire vive 30, dite mémoire répondeur, par exemple une mémoire RAM abréviation anglo-saxonne pour "Random Acces Memory" permettant le stockage des données compressées issues des multiplexeurs-démultiplexeurs 14, 26.

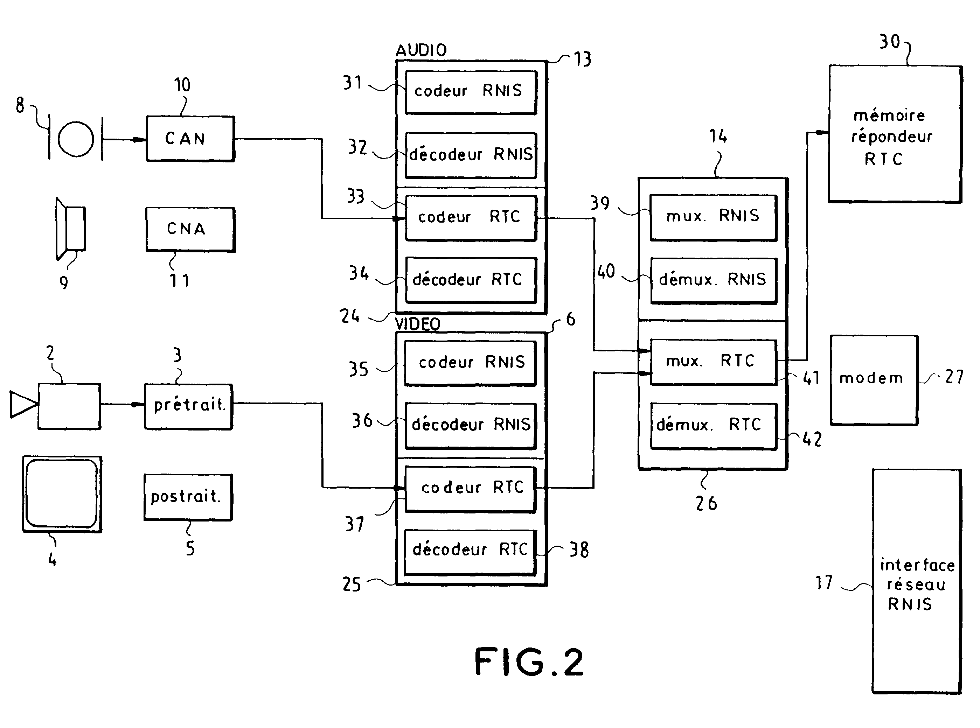

Les figures 2 à 7 suivantes sont toutes basées sur la structure du schéma fonctionnel de la figure 1 et illustrent respectivement le cheminement des différents flux de données audio et vidéo lors de l'implémentation de la fonction répondeur-enregistreur intégrée dans le terminal selon l'invention.

Sur ces figures les éléments identiques à ceux de la figure 1 sont désignés par le même repère.

Le codec audio RNIS 13 comporte un codeur audio RNIS 31 selon la recommandation G.728 du CCITT et un décodeur audio RNIS 32. Le codec audio RTC 24 comporte un codeur audio RTC très bas débit 33 de 4,8 Kbits par seconde et un décodeur audio RTC très bas débit 34 à 4,8 Kbits par seconde.

Le codec vidéo RNIS 6 comporte un codeur vidéo RNIS 35 selon la recommandation H.261 du CCITT et un décodeur vidéo RNIS 36. Le codeur vidéo RTC 25 comporte un codeur vidéo RTC 37 et un décodeur vidéo RTC 38 très bas débit à 4,8 Kbits par seconde. Le multiplexeur-démultiplexeur RNIS 14 comporte un multiplexeur RNIS 39 et un démultiplexeur RNIS 40. Le multiplexeur-démultiplexeur RTC 26 comporte un multiplexeur RTC 41 et un démultiplexeur RTC 42.

La figure 2 illustre le cheminement du flux d'informations audio et vidéo pour l'enregistrement en mode local RTC d'un message d'invitation à laisser un message en cas d'absence sur le répondeur du terminal selon l'invention. Ce message d'invitation est émis vers le terminal appelé, par exemple, au bout d'un nombre déterminé de sonneries. L'enregistrement audio est effectué par l'intermédiaire du microphone 8 et du CAN 10 de l'équipement audio 7. La sortie du CAN 10 est couplée à l'entrée du codeur RTC 33 très bas débit à 4,8Kbits par seconde. La sortie du codeur 33 est couplée sur une première entrée du multiplexeur RTC 41 relative au signal audio. L'enregistrement vidéo est effectué par l'intermédiaire de la caméra 2 et du dispositif de pré-traitement 3 de la séquence d'images enregistrées. La sortie du dispositif de pré-traitement 3 est couplée à l'entrée du codeur vidéo RTC 37 très bas débit. La sortie du codeur 37 est couplée sur la deuxième entrée du multiplexeur RTC 41 relative au signal vidéo. La sortie du multiplexeur RTC 41 est couplée à l'entrée de la mémoire répondeur 30

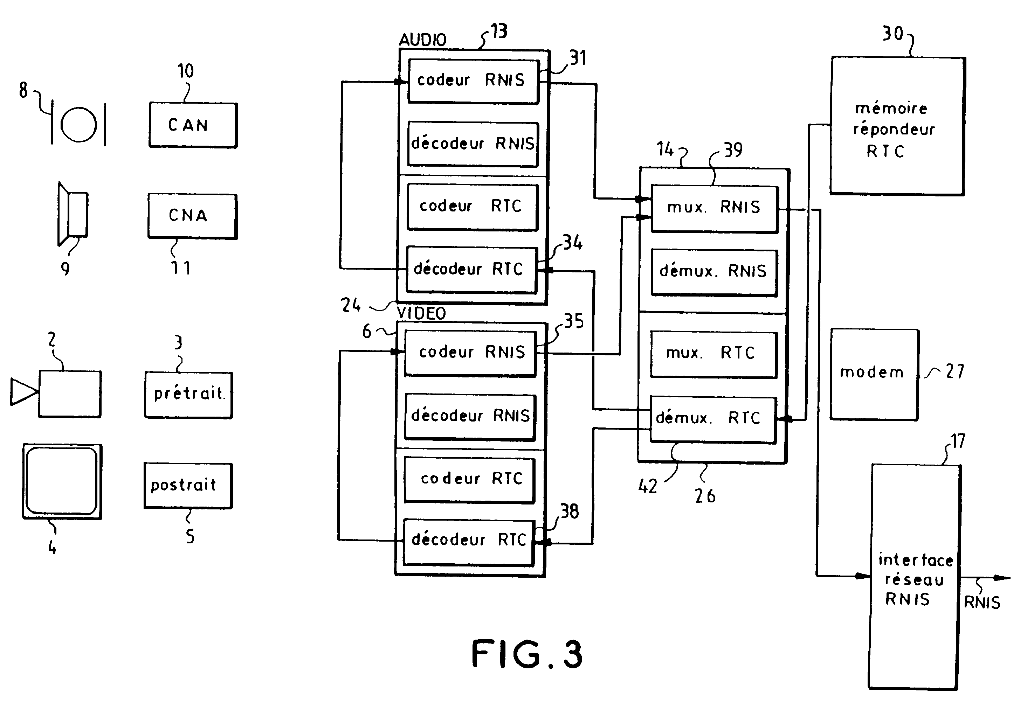

La figure 3 illustre le cheminement du flux d'informations audio et vidéo pour l'envoi du message d'invitation sur appel d'un terminal de visiophonie en mode RNIS. Le message d'invitation à laisser un message contenu dans la mémoire répondeur 30 est transmis à l'entrée du démultiplexeur RTC 42. Une première sortie relative au signal audio est couplée au décodeur audio RTC 34 très bas débit à 4,8Kbits par seconde. La sortie du décodeur 34 est couplée à l'entrée du codeur audio RNIS 31 et la sortie de ce codeur 31 est couplée sur une première entrée du multiplexeur RNIS 39 relative au signal audio. Une deuxième sortie du démultiplexeur RTC 42 relative au signal vidéo est couplée à l'entrée du décodeur vidéo RTC 38 très bas débit à 4,8Kbits par seconde. La sortie du décodeur 38 est couplée à l'entrée du codeur vidéo RNIS 35. La sortie du codeur 35 est couplée sur une deuxième entrée du multiplexeur RNIS 39 relative au signal vidéo. Le message d'invitation à lancer un message délivré en sortie du multiplexeur RNIS 39 est ensuite transmis via l'interface réseau 17 au terminal appelant par le RNIS.

La sortie des décodeurs RTC audio 34 et vidéo 38 est couplée respectivement à l'entrée des codeurs RNIS audio 31 et video 35 et il n'est pas possible d'ajouter de l'information pour améliorer la qualité des images par le codage RNIS. Néanmoins il faut éviter d'apporter des dégradations supplémentaires.

Les informations issues de la sortie des codeurs audio 31 et vidéo 35 RNIS sont destinées à être transmises à un terminal appelant distant du terminal appelé. La robustesse vis-à-vis des erreurs de transmission peut être augmentée en augmentant le nombre de blocs d'images codés en mode intra car le débit l'autorise.

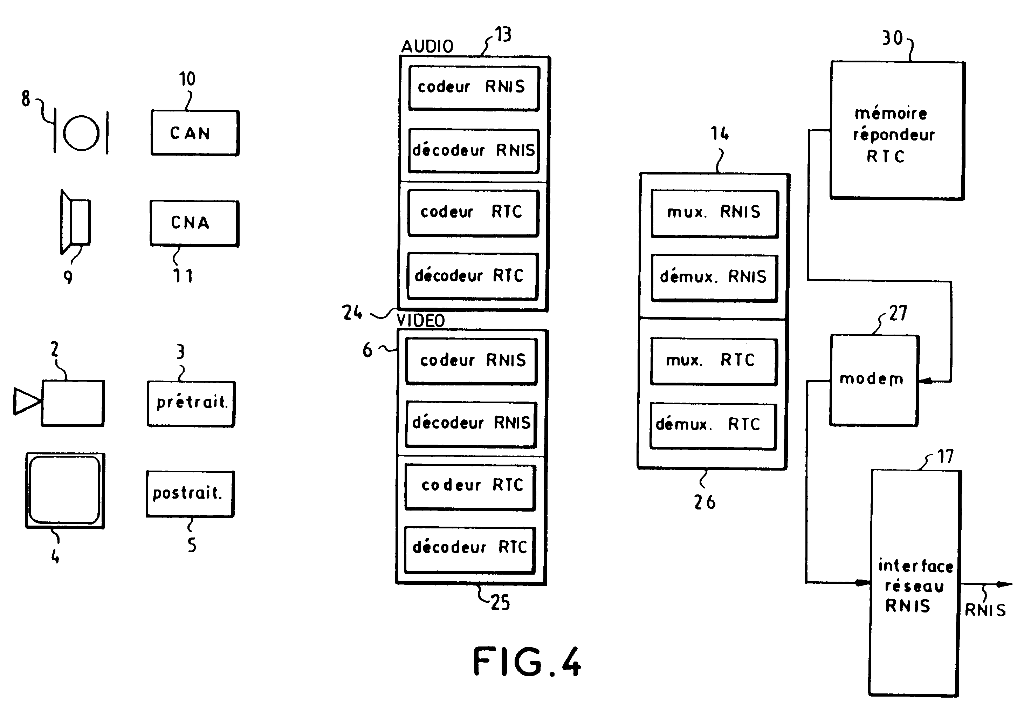

La figure 4 illustre le cheminement du flux d'informations audio et vidéo pour l'envoi du message d'invitation sur un appel issu d'un terminal de visiophonie RTC. Le message audiovisuel stocké à l'intérieur de la mémoire répondeur 30 en mode RTC est injecté à l'entrée du modulateur-démodulateur ou modem 27. La sortie de ce modulateur 27 est couplée à l'entrée de l'interface réseau 17. Le signal audiovisuel livré en sortie de l'interface réseau 17 est en mode RTC et transporté par le support physique du RNIS. Le seul mode utilisé dans cette configuration étant le mode RTC, seuls la mémoire répondeur 30, le modem 27 et l'interface 17 sont utilisés.

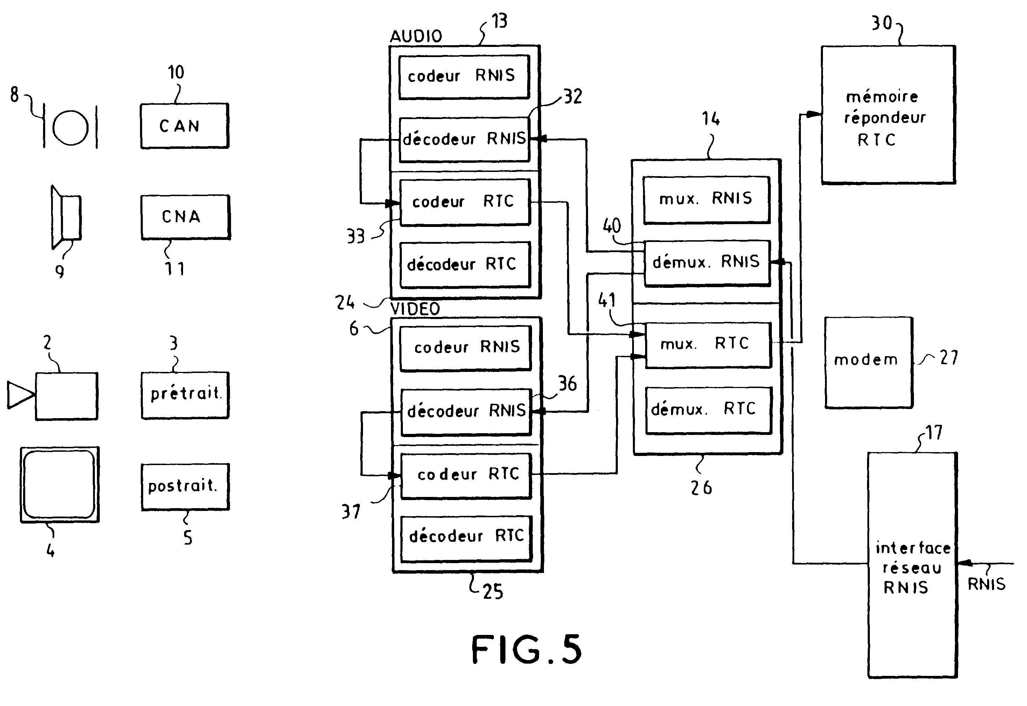

La figure 5 illustre le cheminement du flux d'informations audio et vidéo pour l'enregistrement d'un message laissé par un terminal de visiophonie en mode RNIS sur le répondeur du terminal selon l'invention. Le message audiovisuel transporté par le RNIS est injecté à l'entrée de l'interface réseau 17. La sortie de l'interface 17 est couplée à l'entrée du démultiplexeur RNIS 40. Une première sortie du démultiplexeur 40 relative au signal vidéo est injectée à l'entrée du décodeur vidéo RNIS 36 La sortie du décodeur 36 est couplée à l'entrée du codeur vidéo RTC 37 très bas débit à 4,8Kbits par seconde. La sortie du codeur 37 est ensuite couplée sur une première entrée du multiplexeur RTC 41 relative au signal vidéo. La deuxième sortie du démultiplexeur 40 RNIS relative au signal audio est injectée à l'entrée du décodeur audio RNIS 32. La sortie du décodeur 32 est couplée à l'entrée du codeur audio RTC 33 très bas débit à 4,8Kbits par seconde. La sortie de ce codeur 33 est couplée sur la deuxième entrée du multiplexeur RTC 41 relative au signal audio, le message audiovisuel laissé par le correspondant du terminal de visiophonie RNIS délivré en sortie du multiplexeur RTC 41 est ensuite mémorisé dans la mémoire répondeur 30 en mode RTC.

La sortie des décodeurs audio et vidéo 32 et 36 RNIS est couplée respectivement à l'entrée des codeurs audio et vidéo 33 et 37 RTC très bas débit. Les décodeurs RNIS audio et vidéo 32, 36 peuvent constituer un étage de pré-analyse pour les codeurs RTC 33 et 37. Le signal vidéo intermédiaire subit une compression supplémentaire, c'est-à-dire une réduction de la quantité d'informations représentant le signal vidéo. Il est donc possible d'optimiser la qualité de cette deuxième compression en exploitant certains paramètres extraits du décodeur 36. Trois de ces principaux paramètres sont cités ci-après :

Un premier paramètre est le pas de quantification utilisé par le décodeur 36. La quantification introduit une erreur sur le signal reconstruit en sortie du décodeur 36. Le codeur 37 couplé au décodeur 36 peut prendre en compte ce paramètre afin d'éviter un gaspillage du nombre de bits affectés à un bloc de l'image, en utilisant une quantification plus précise du signal d'erreur résultant de la première opération de codage-décodage, un pas de quantification minimal étant déterminé pour chaque bloc de l'image.

Un deuxième paramètre est le champ de mouvement. Pour le codage RTC à très bas débit, le coût, c'est-à-dire le nombre de bits générés par les vecteurs mouvements, peut s'avérer important par rapport au nombre de bits disponibles par image. Le champ est en général uniformisé pour minimiser le coût de transmission en différentiel. Les vecteurs issus du décodage constituent une information importante pour un algorithme de lissage du champ de mouvement.

Un troisième paramètre est lié aux modes de codage extraits du décodeur. L'analyse des modes de codage permet la classification en zones fixes, correspondant à des blocs images ayant été décodées en mode inter sans coefficient et sans compensation de mouvement, et en zones animées, correspondant à des blocs d'images ayant été décodées en mode inter avec des coefficients et une compensation de mouvement. Cette analyse permet d'attribuer de façon intelligente et a priori la quantité d'informations qui est affectée à chaque partie de l'image à coder pour une qualité optimale permettant ainsi une régulation du flux d'informations.

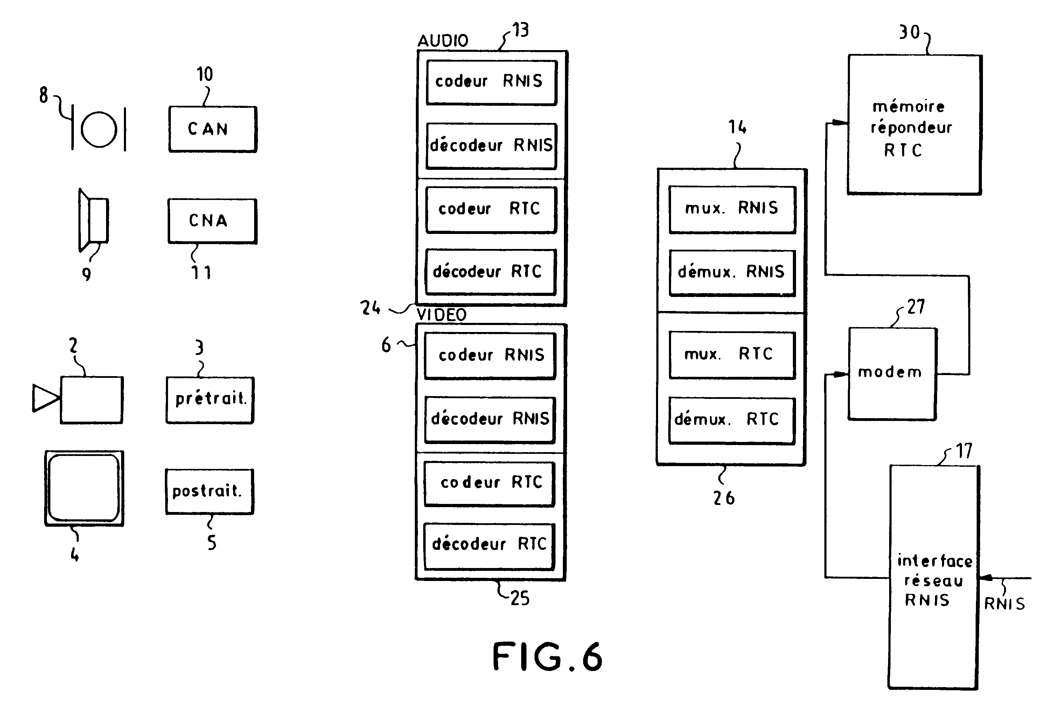

La figure 6 illustre le cheminement du flux d'informations audio et vidéo pour l'enregistrement d'un message laissé par un terminal de visiophonie en mode RTC, ou par un téléphone, sur le répondeur du terminal selon l'invention. Le message audiovisuel issu du terminal de visiophonie RTC, ou téléphone, est transmis via le RNIS à l'entrée de l'interface réseau 17. La sortie de l'interface 17 est couplée à l'entrée du modem 27. La sortie du modem 27 est couplée à l'entrée de la mémoire répondeur 30.

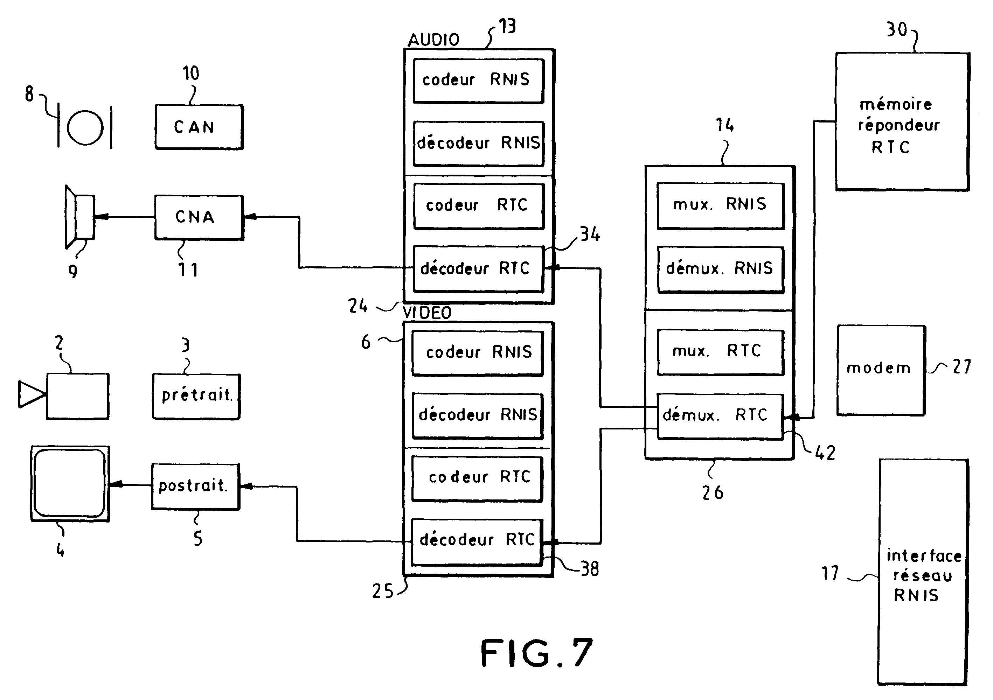

La figure 7 illustre le cheminement du flux d'informations audio et vidéo pour la lecture des messages, quelle que soit leur origine, stockés dans la mémoire répondeur 30 Le message mémorisé est injecté à l'entrée du démultiplexeur RTC 42. Une première sortie du démultiplexeur relative au signal vidéo est couplée à l'entrée du décodeur vidéo RTC 38 très bas débit à 4,8Kbits par seconde. La sortie du décodeur 38 est couplée à l'entrée du dispositif de post-traitement 5. La sortie du dispositif de post-traitement 5 est couplée à l'entrée du terminal de visualisation 4. Une deuxième sortie du démultiplexeur RTC 42 relative au signal audio est couplée à l'entrée d'un décodeur audio RTC 34 à 4,8Kbits par seconde. La sortie du décodeur 34 est couplée à l'entrée du convertisseur numérique-analogique 11. La sortie du convertisseur analogique-numérique 11 délivrant le signal audio analogique est injectée sur le haut-parleur 9.

Un exemple quantitatif concernant la capacité mémoire utilisée par le terminal selon l'invention pour l'implémentation de la fonction répondeur-enregistreur en fonction de la longueur des messages enregistrés en mémoire est donné ci-après :

Pour un débit d'informations audio comprimé à 4,8Kbits par seconde et un débit d'informations vidéo comprimé à 11,2Kbits par seconde en mode RTC, un débit minimal de 16Kbits par seconde est nécessaire pour le stockage. Soit les quantités suivantes de mémoire :
- 1 mégabit de mémoire pour 64 secondes,
- 4 mégabits de mémoire pour 4,2 minutes, et
- 16 mégabits de mémoire pour 17 minutes.

Les mémoires utilisées sont des mémoires à performances faibles, c'est-à-dire à temps d'accès faibles. Par contre, les mémoires doivent pouvoir être alimentées pendant les coupures ou micro-coupures secteur sous peine de perte d'une partie ou de la totalité des messages.

Outre le faible coût en mémoire, le dispositif selon l'invention présente d'autres avantages.

L'accès à l'un quelconque des messages stockés dans la mémoire répondeur 30 est entièrement aléatoire, ce qui présente l'avantage d'une relecture et d'une avance au message suivant très rapide. Un microprocesseur central peut conserver les paramètres d'un message reçu tel que sa durée, son heure d'émission, sa date etc...

Le fait que le terminal soit relié au RNIS autorise l'exploitation de certaines fonctionnalités liées à ce réseau, telles qu'une identification de l'appelant, un filtrage de message, une indexation par priorité de relecture etc...

La compression vidéo peut être effectuée avec une latence importante, ce qui n'est pas possible dans une conversation interactive où le délai importe beaucoup. Ceci permet de mieux réguler le flux des informations audiovisuelles et par conséquent d'obtenir une meilleure qualité d'image.

Dans le cas où le terminal distant appelant est un téléphone, le répondeur du terminal de visiophonie selon l'invention se comporte alors comme un simple répondeur-enregistreur audio.

## Revendications

1. Terminal de visiophonie bi-mode RNIS/RTC comportant au moins un équipement audio (7) et un équipement vidéo (1) couplés respectivement à un réseau RNIS par l'intermédiaire d'un codeur-décodeur bi-mode RNIS/RTC audio (13, 24) comportant un codeur audio RNIS (31), un décodeur audio RNIS (32), un codeur audio RTC (33) et un décodeur audio RTC (34), et par un codeur-décodeur bi-mode RNIS/RTC vidéo (6, 25) comportant un codeur vidéo RNIS (35), un décodeur vidéo RNIS (36), un codeur vidéo RTC (37) et un décodeur vidéo RTC (38), caractérisé en ce qu'il comporte pour intégrer une fonction de répondeur-enregistreur dans le terminal de visiophonie, une mémoire vive (30) permettant le stockage des messages audiovisuels en mode RTC, en ce que la sortie des décodeurs audio et vidéo RNIS (32 et 36) est couplée respectivement à l'entrée des codeurs audio et vidéo RTC (33 et 37) pour l'enregistrement d'un message audiovisuel, laissé par le correspondant du terminal distant appelant, dans la mémoire vive (30), et en ce que la sortie des décodeurs audio et vidéo RTC (34 et 38) est couplée respectivement à l'entrée des codeurs audio et vidéo RNIS (31 et 35) pour l'envoi d'un message audiovisuel, stocké dans la mémoire vive (30), invitant le correspondant du terminal appelant à laisser un message.

2. Terminal de visiophonie bi-mode RNIS/RTC selon la revendication 1, caractérisé en ce qu'il comporte en outre un multiplexeur-démultiplexeur bi-mode RNIS/RTC (14, 26), pour le multiplexage des données numériques de nature différente transitant dans le terminal, couplé aux codeurs-décodeurs bi-mode RNIS/RTC audio (13, 24) et vidéo (6, 25), une interface physique (17) disposée entre le réseau RNIS et le terminal, un modem (27) utilisé en mode RTC, et des moyens de gestion et d'établissement (18) d'une communication en visiophonie entre le terminal de visiophonie et au moins un terminal distant appelant connecté au même RNIS.

3. Terminal de visiophonie bi-mode RNIS/RTC selon l'une quelconque des revendications 1 et 2, caractérisé en ce que les décodeurs audio et vidéo RNIS (32 et 36) constituent respectivement un étage de pré-analyse pour les codeurs audio et vidéo RTC (33 et 37) permettant de réduire la quantité d'informations représentant le signal vidéo.

## Patentansprüche

1. Zwei-Moden-Bildfernsprechstation für ein ISDN (integrated services digital network) oder ein STN (switched telephone network) umfassend wenigstens eine Audio-Einrichtung (7) und eine Video-Einrichtung (1), wobei die Einrichtungen jeweils mit einem ISDN über einen Zwei-Moden-ISDN/STN-Audio-Kodierer/Dekodierer (13, 24) verbunden sind, der einen ISDN-Audio-Kodierer (31), einen ISDN-Audio-Dekodierer (32), einen STN-Audio-Kodierer (33) und einen STN-Audio-Dekodierer (34) enthält, und über einen Zwei-Moden-ISDN/STN-Video-Kodierer/Dekodierer (6, 25), der einen ISDN-Video-Kodierer (35), einen ISDN-Video-Dekodierer (36), einen STN-Video-Kodierer (37), und einen STN-Video-Dekodierer (38) enthält, dadurch gekennzeichnet, daß zur Erzeugung einer Antwort/Aufzeichnungsfunktion in der Bildfernsprechstation ein RAM-Speicher verwendet wird, um audiovisuelle Nachrichten im STN-Mode zu speichern, und daß die Ausgänge der ISDN-Audio- und Video-Dekodierer (32 und 36) jeweils mit den Eingängen der STN-Audio- und Video-Kodierer (33 und 37) verbunden sind, um in dem RAM (30) eine audiovisuelle Nachricht aufzuzeichnen, die von einem anrufenden Teilnehmer über eine enffernte Station gesendet wurde, und wobei die Ausgänge der STN-Audio- und Video-Dekodierer (34 und 38) jeweils mit den Eingängen der ISDN-Audio- und Video-Kodierer (31 und 35) verbunden sind, um eine audiovisuelle, in dem RAM (30) gespeicherte Nachricht zu senden, die den anrufenden Teilnehmer einlädt, eine Nachricht zu hinterlassen.

2. Zwei-Moden-Bildfernsprechstation nach Anspruch 1, dadurch gekennzeichnet, daß diese auch einen Zwei-Moden-ISDN/STN-Multiplexer/Demultiplexer (14, 26) enthält, um die digitalen Daten unterschiedlicher Art, die die Station durchlaufen, welche mit Zwei-Moden-ISDN/STN-Audio- und Video-Kodierern/Dekodierern (13, 24 bzw. 6, 25) verbunden ist, zu einer physikalischen Schnittstelle (17) zwischen der Bild-Fernsprechstationund dem ISDN, zu einem im STN-Mode arbeitendem Modem (27) und zu Mitteln (18) zum Aufbau eines Bild-Fernsprechanrufs zwischen der Bild-Fernsprechstation und wenigstens einer entfernten Anrufstation, die mit demselben ISDN verbunden ist, zu multiplexen.

3. Zwei-Moden-Bild-Fernsprechstation nach Anspruch 1, dadurch gekennzeichnet, daß die ISDN-Audio- und Video-Dekodierer (32 und 36) jeweils eine Voranalysestufe für die STN-Audio- und Video-Kodierer (33 und 37) bilden, wodurch die Menge von Informationen in dem Videosignal verringert werden kann.

## Claims

1. Dual-mode ISDN/STN videophone terminal comprising at least one audio rig (7) and one video rig (1) coupled respectively to an ISDN network by way of a dual-mode ISDN/STN audio coder/decoder (13, 24) comprising an ISDN audio coder (31), an ISDN audio decoder (32), an STN audio coder (33) and an STN audio decoder (34), and by a dual-mode ISDN/STN video coder/decoder (6, 25) comprising an ISDN video coder (35), an ISDN video decoder (36), an STN video coder (37) and an STN video decoder (38), characterized in that it comprises, in order to incorporate an answering/recording function into the videophone terminal, a random access memory (30) allowing the storage of the audiovisual messages in STN mode, in that the output of the ISDN audio and video decoders (32 and 36) is coupled respectively to the input of the STN audio and video coders (33 and 37) for the recording of an audiovisual message, left by the party of the distant calling terminal, in the random access memory (30), and in that the output of the STN audio and video decoders (34 and 38) is coupled respectively to the input of the ISDN audio and video coders (31 and 35) for the sending of an audiovisual message stored in the random access memory (30), inviting the party of the calling terminal to leave a message.

2. Dual-mode ISDN/STN videophone terminal according to Claim 1, characterized in that it furthermore comprises a dual-mode ISDN/STN multiplexer/ demultiplexer (14, 26), for the multiplexing of the digital data of different kind travelling through the terminal, coupled to the dual-mode ISDN/STN audio (13, 24) and video (6, 25) coders/decoders, a physical interface (17) arranged between the ISDN network and the terminal, a modem (27) used in STN mode, and means (18) for managing and setting up a videophone communication between the videophone terminal and at least one distant calling terminal connected to the same ISDN.

3. Dual-mode ISDN/STN videophone terminal according to either one of Claims 1 and 2, characterized in that the ISDN audio and video decoders (32 and 36) respectively constitute a pre-analysis stage for the STN audio and video coders (33 and 37) making it possible to reduce the amount of information representing the video signal.
